# DEMANDE DE BREVET EUROPEEN

(11) **EP 4 310 457 A1**
(43) Date de publication de la demande: **24.01.2024**
(21) Numéro de dépôt: 23184526.4
(22) Date de dépôt: 10.07.2023
(51) Int. Cl.: G01D 5/353

(54) **SYSTÈME DE CAPTEUR À FIBRE OPTIQUE DISTRIBUÉ**

(30) Priorité: 19.07.2022 FR 2207401
(71) Demandeur: Fosina, 92000 Nanterre (FR)
(72) Inventeur: HARTOG, Arthur, 92000 Nanterre (FR)
(74) Mandataire: Ex Materia

(57) **Abrégé**

La présente invention concerne un système (1) de capteur à fibre optique distribué comportant :
- un module à décalage de fréquence (22) apte à décaler en fréquence la lumière reçue d'un laser (16) et à l'envoyer dans un dispositif de circulation optique (40) apte à transmettre la lumière décalée en fréquence dans une fibre optique (42), à recevoir une lumière rétrodiffusée correspondante, à séparer la lumière rétrodiffusée de la lumière transmise, et à envoyer la lumière rétrodiffusée vers un récepteur (46),
- le récepteur (46), apte à construire à partir de la lumière rétrodiffusée et d'une lumière non rétrodiffusée issue du laser (16), un signal électrique représentatif de différences de phase et/ou d'amplitude entre la lumière rétrodiffusée et la lumière transmise,
le système (1) comportant un circuit intégré photonique (30) dans lequel est implémenté le module à décalage de fréquence (22).

## Description

La présente invention se rapporte au domaine de l'opto-électronique et concerne plus précisément un capteur distribué à fibre optique (« distributed fiber-optic sensor » ou DFOS en anglais).

Un tel capteur comporte un interrogateur de fibre optique et une fibre optique pour laquelle le capteur va mesurer une quantité physique (par exemple, température, déformation) sur toute la longueur de la fibre optique. L'interrogateur envoie une lumière dans la fibre optique qui va créer une lumière rétrodiffusée sur toute la longueur de la fibre. Cette lumière rétrodiffusée revient vers l'interrogateur qui analyse cette lumière rétrodiffusée pour mesurer la quantité physique désirée.

Les capteurs distribués à fibre optique comprennent entre autres :
- les capteurs de température distribués utilisant la rétrodiffusion due à l'effet Raman, décalant le spectre de la lumière de quelques THz (Teraherz),
- les capteurs de déformation et de température quasi-statique distribués (« distributed strain and température sensor » en anglais) utilisant la rétrodiffusion due à l'effet Brillouin. Cet effet crée un décalage en fréquence, pour un laser de 1550nm (nanomètre) de longueur d'onde, d'environ 11 GHz (Gigaherz),
- les capteurs de déformation dynamique (« Dynamic Acoustic Sensor » en anglais), qui utilisent la rétrodiffusion due à l'effet Rayleigh, qui ne décale pas la lumière en fréquence. Dans certains cas ces capteurs n'utilisent pas un véritable effet Rayleigh mais la lumière réfléchie par un réseau de réflecteurs dans la fibre à tester (appelée dans ce cas EBF d'après l'anglais « Engineered Backscatter Fiber »), avec des réflexions distinctes ou très proches l'une de l'autre. Le signal optique généré par ces réflexions est d'amplitude plus forte que celle d'un véritable effet Rayleigh,
- les capteurs à effet Rayleigh utilisant un balayage fréquentiel et qui effectuent une mesure quasi-statique de température et/ou de déformation.

Les interrogateurs de tels capteurs utilisent différentes briques optiques qui doivent être connectées par des guides d'onde avec le moins de pertes lumineuses possibles. Ces interrogateurs sont encombrants et peu efficaces pour limiter les pertes lumineuses au niveau des interconnexions entre ces briques optiques. La technologie des circuits photoniques intégrés a permis de réduire ces inconvénients sans parvenir à limiter de manière satisfaisante l'encombrement et les pertes lumineuses de tels capteurs. Notamment, la manipulation d'un tel capteur en situation opérationnelle de test sur une fibre optique génère des pertes lumineuses dommageables pour effectuer de bonnes mesures sur la fibre optique. Il existe cependant un besoin persistant de réduire la taille de ces composants en les intégrant au mieux dans un circuit photonique intégré.

Les inventeurs ont réussi à réaliser un capteur distribué à fibre optique très peu encombrant, résistant aux vibrations et avec très peu de pertes lumineuses, en choisissant notamment un interrogateur de type hétérodyne, éventuellement à double impulsion, pouvant être utilisé à la fois comme capteur de température ou de déformation en utilisant divers effets (Raman, Brillouin, Rayleigh).

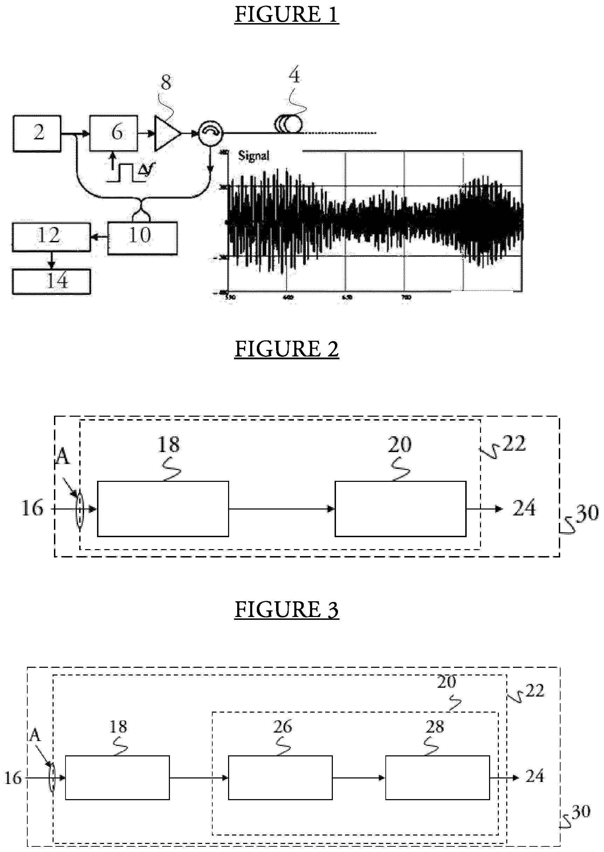

Le principe d'un interrogateur hétérodyne en lui-même est connu et est représenté en figure 1. Un tel interrogateur utilise un laser 2 qui injecte une lumière dans une fibre 4 à tester sur laquelle sont effectuées des mesures de température ou de déformation. Avant injection dans la fibre 4 à tester, cette lumière est décalée en fréquence d'un décalage Δf par un module à décalage de fréquence et à génération d'impulsions 6 puis amplifiée par un amplificateur optique 8. La lumière rétrodiffusée dans la fibre 4 est analysée par un récepteur 10 qui génère un signal électrique représentatif des différences d'amplitude et/ou de phase entre la lumière issue du laser 2 et la lumière rétrodiffusée. Ce signal électrique est converti par un convertisseur 12 en un signal numérique qui est envoyé sur un processeur 14 effectuant un diagnostic de température ou de déformation en divers endroits de la fibre 4.

En faisant ce choix d'interrogateur, les inventeurs ont pu intégrer le module à décalage en fréquence entièrement dans un circuit photonique intégré et se défaire de la plupart des désavantages de l'art antérieur.

La présente invention propose un système de capteur à fibre optique distribué comportant :
- un port d'entrée apte à recevoir un faisceau de lumière laser généré par une source de lumière laser,
- un module à décalage de fréquence apte à recevoir au moins une partie de la lumière issue dudit faisceau et à décaler en fréquence ladite lumière reçue,
- un port de sortie apte à recevoir ladite lumière décalée en fréquence et à l'envoyer dans un dispositif de circulation optique,
- ledit dispositif de circulation optique, ledit dispositif de circulation optique étant apte à :
   - transmettre ladite lumière décalée en fréquence dans une fibre optique,
   - recevoir une lumière rétrodiffusée correspondant à ladite lumière décalée en fréquence, en provenance de ladite fibre optique,
   - séparer ladite lumière rétrodiffusée de ladite lumière transmise, et à
   - envoyer ladite lumière rétrodiffusée vers un récepteur,
- ledit récepteur, ledit récepteur étant apte à construire à partir de ladite lumière rétrodiffusée et d'une lumière non rétrodiffusée issue de ladite source de lumière laser, un signal électrique représentatif de différences de phase et/ou d'amplitude entre ladite lumière rétrodiffusée et ladite lumière transmise,
ledit système de capteur à fibre optique étant caractérisé en ce qu'il comporte un circuit intégré photonique dans lequel est implémenté ledit module à décalage de fréquence.

Le port d'entrée du système est à comprendre comme l'entrée du guide d'onde accueillant la lumière issue de la source de lumière laser. En effet, le système capteur distribué à fibre optique selon l'invention comporte dans une de ses variantes de réalisation, un laser à bande étroite intégré dans le circuit photonique intégré. Par ailleurs, le signal électrique représentatif peut être décalé en fréquence par rapport à la lumière injectée dans la fibre à tester.

Grâce à l'invention, l'ensemble du chemin aller de la lumière depuis la source de lumière laser vers la fibre optique, à l'exception du dispositif de circulation optique, d'un éventuel amplificateur ou isolateur, est intégré dans le circuit intégré photonique, ce qui permet de diminuer fortement l'encombrement et les pertes lumineuses par rapport à l'art antérieur, ainsi que les problèmes dus aux vibrations du système lors de son utilisation.

Le capteur selon l'invention permet donc une détection hétérodyne ou hétérodyne à double impulsion, des défauts dans une fibre optique.

Le dispositif de circulation optique est par exemple un circulateur, un coupleur ou un commutateur optique.

Préférentiellement, ledit circuit intégré photonique du système selon l'invention comporte également ledit récepteur. Cela augmente encore la compacité du système et sa résistance aux vibrations.

Avantageusement, ledit module à décalage de fréquence du système selon l'invention comporte en entrée, un modulateur d'entrée apte à moduler ladite au moins une partie de la lumière issue dudit faisceau de lumière laser par un signal périodique. Ce modulateur d'entrée utilisant au moins un signal périodique, permet de choisir la fréquence de décalage du système selon l'invention, ce qui permet de l'utiliser pour analyser la lumière rétrodiffusée selon différents effets (Raman, Rayleigh, Brillouin, etc) et autorise une diversité d'applications du système selon l'invention.

Ledit modulateur d'entrée est choisi de préférence parmi un modulateur de phase électro-optique, un modulateur d'intensité électro-optique, un modulateur à électro-absorption, ou un amplificateur optique à semi-conducteur.

Avantageusement, ledit module à décalage de fréquence du système selon l'invention comportant ledit module d'entrée comporte en outre :
- un module à gain variable apte à faire varier l'amplitude de la lumière modulée en sortie dudit modulateur d'entrée, et
- un laser semiconducteur apte à recevoir la lumière issue dudit module à gain variable et à émettre une lumière décalée en fréquence par rapport à la lumière issue de ladite source de lumière, d'un décalage fréquentiel fonction de la fréquence dudit signal périodique.

Cette implémentation de l'invention permet un filtrage simple des fréquences générées par le module d'entrée. En outre un tel agencement du système comportant après une source de lumière laser, un modulateur d'entrée suivi d'un laser contrôlé en gain, permet de placer un isolateur entre la source de lumière laser et le port d'entrée du système, plutôt que dans le module à décalage de fréquence, ce qui nécessiterait d'implémenter celui-ci par parties dans deux circuits photoniques intégrés différents.

Alternativement, ledit module à décalage de fréquence comporte en outre, en sortie dudit modulateur d'entrée, un filtre photonique interférométrique à bande étroite. Cette implémentation alternative au laser contrôlé en gain permet de ne pas nécessiter d'isolateur optique supplémentaire, celui-ci étant nécessaire dans l'alternative précédente dans le cas où on veut éviter toute interaction retour entre le laser contrôlé en gain et la source de lumière laser.

Le système de capteur à fibre optique distribué selon l'invention comporte avantageusement un premier amplificateur optique entre ledit port de sortie et ledit dispositif de circulation optique et un deuxième amplificateur optique entre ledit dispositif de circulation optique et ledit récepteur. Ces amplificateurs permettent d'assurer d'avoir une puissance de lumière rétrodiffusée assez importante pour que le récepteur puisse faire des mesures optimales sur la fibre optique.

Avantageusement, ledit circuit intégré photonique comporte en outre, entre ledit module à décalage de fréquence et ledit port de sortie, un ou plusieurs modulateurs choisis dans la liste comportant :
- un modulateur de phase électro-optique,
- un modulateur d'intensité électro-optique,
- un modulateur à électro-absorption,
- un amplificateur optique à semi-conducteur,
- un modulateur de polarisation.

Avantageusement, ledit circuit intégré photonique comporte en outre un autre module à décalage de fréquence apte à recevoir une partie de la lumière issue de ladite source de lumière laser, à décaler ladite partie de lumière en fréquence et à transférer ladite partie de lumière décalée en fréquence audit récepteur. La présence de ce deuxième module à décalage de fréquence permet de faciliter le traitement effectué par le récepteur. Comme le module à décalage de fréquence du système selon l'invention opérant sur la lumière injectée dans la fibre optique, le deuxième module de fréquence offre la possibilité de choisir le décalage en fréquence effectué, plus précisément ici le deuxième module de fréquence permet ici de choisir le décalage observé par le récepteur.

Dans une variante de ce mode de réalisation de l'invention avec un deuxième module à décalage de fréquence, ledit circuit intégré photonique comporte en outre un autre récepteur apte à recevoir une partie de ladite lumière rétrodiffusée et une partie de la lumière issue de ladite source de lumière laser sans décalage fréquentiel ou avec un décalage fréquentiel distinct du décalage fréquentiel généré par ledit autre module à décalage de fréquence, ledit décalage fréquentiel distinct étant alors généré par encore un autre module à décalage de fréquence dudit circuit intégré photonique. Cette variante permet d'utiliser le système selon l'invention pour plusieurs applications, par exemple en analysant simultanément la lumière rétrodiffusée par effet Brillouin et la lumière rétrodiffusée par effet Rayleigh.

Dans une autre variante du mode de réalisation de l'invention avec un deuxième module à décalage de fréquence, ledit circuit intégré photonique comporte en outre un séparateur optique de polarisation, un rotateur de polarisation et un autre récepteur apte à recevoir une partie de ladite lumière rétrodiffusée en sortie dudit rotateur de polarisation, et à recevoir une partie de la lumière issue dudit autre module à décalage de fréquence, ledit séparateur optique de polarisation étant apte à recevoir ladite lumière rétrodiffusée en provenance dudit dispositif de circulation optique, à former deux faisceaux de lumière et à envoyer l'un desdits faisceaux vers ledit récepteur et l'autre desdits faisceaux vers ledit rotateur de polarisation. Cette autre variante permet d'analyser la lumière rétrodiffusée sur différents axes de polarisation.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] déjà décrite en relation avec l'art antérieur, représente un système de capteur à fibre optique utilisant une configuration hétérodyne pour la détection de température ou de déformation dans une fibre optique,
[fig 2] est une représentation schématique d'un module de décalage de fréquence dans le système selon l'invention,
[fig 3] illustre un exemple de réalisation du module de décalage de fréquence de la figure 2, dans le système selon l'invention,
[fig 4] représente un premier mode de réalisation du système selon l'invention,
[fig 5] représente une variante du premier mode de réalisation du système selon l'invention,
[fig 6] représente un deuxième mode de réalisation du système selon l'invention, et
[fig 7] représente un troisième mode de réalisation du système selon l'invention.

Le système 1 de capteur à fibre optique selon l'invention intègre un module 22 à décalage de fréquence représenté sur la figure 2, dans un circuit photonique intégré 30. Il est à noter que dans cette demande, on entend par circuit photonique intégré un circuit intégrant une ou plusieurs fonctions photoniques sur un substrat, par exemple de type InP (Phosphure d'Indium), silicium ou nitrure de silicium. Ces fonctions sont interconnectées dans le même substrat par des guides d'onde. Le substrat du circuit photonique intégré 30 est d'un seul bloc de substrat. En variante le circuit photonique intégré selon l'invention est fait de plusieurs substrats de matières différentes reliés par des guides d'onde.

Le module 22 à décalage de fréquence comporte un module d'entrée 18 qui reçoit depuis un port d'entrée A la lumière issue d'une source de lumière laser 16 à une fréquence initiale, modifie cette lumière en la modulant par un signal périodique, ce qui crée en sortie de ce module d'entrée 18, une lumière avec des bandes latérales de fréquences par rapport à la fréquence initiale.

Typiquement le module d'entrée 18 utilisé est un modulateur de phase électro-optique, un modulateur d'intensité électro-optique, un modulateur à électro-absorption, ou un amplificateur optique à semi-conducteur. La fréquence de modulation est typiquement de l'ordre de plusieurs centaines de MHz (Mégahertz) voire plusieurs GHz (Gigahertz), la fréquence de la source de lumière laser étant de l'ordre de plusieurs centaines de THz (Terahertz).

La lumière contenant des bandes latérales de fréquences en sortie du modulateur d'entrée 18 est envoyée dans un module de sélection de fréquence 20 du module de décalage de fréquence 22. Ce module de sélection de fréquence 20 réalise un filtrage de la lumière qu'il reçoit pour écarter les bandes latérales de fréquences indésirables et ne conserver qu'une zone de fréquence dans la lumière reçue du module d'entrée 18, ce qui permet d'obtenir en sortie du module de sélection de fréquence 20 une lumière 24 décalée en fréquence par rapport à la lumière de la source de lumière laser 16.

Cette lumière 24 décalée en fréquence est émise en sortie du module de décalage de fréquence 22. Le module de décalage de fréquence 22 permet donc de contrôler le décalage en fréquence effectué sur la lumière laser 16 grâce au choix de la fréquence de modulation utilisée par le module d'entrée 18, et grâce au filtrage effectué par le module de sélection de fréquence 20, qui ne garde par exemple que la fréquence initiale décalée de la fréquence de modulation ou bien la fréquence initiale décalée d'une harmonique de cette fréquence de modulation.

La figure 3 illustre un exemple de réalisation du module de sélection de fréquence 20. Dans cet exemple de réalisation, le module de sélection de fréquence 20 comporte un module à gain variable 26 qui reçoit la lumière modulée par le module d'entrée 18 et contrôle la puissance de cette lumière modulée avant de la transmettre à un laser semiconducteur 28, intégré au module de sélection de fréquence 20. Autrement dit le laser semiconducteur 28 est verrouillé sur sa fréquence d'émission naturelle par injection en modulant le gain du laser semiconducteur 28. Le laser semiconducteur 28 est choisi de sorte à ce que sa fréquence d'émission naturelle soit proche de la fréquence décalée que l'on veut garder dans la lumière modulée issue du module d'entrée 18. Cette fréquence naturelle peut être modifiée pour se rapprocher de la fréquence décalée désirée en modifiant la température du laser semiconducteur 28 ou son courant de polarisation.

Par fréquence « proche » de la fréquence décalée que l'on cible, on entend une fréquence comprise dans une bande de fréquence de l'ordre de 1GHz autour de cette fréquence décalée cible, appelée bande de fréquence de verrouillage dans la suite, cette bande de fréquence de verrouillage dépendant de la puissance injectée dans le laser semiconducteur 28 par rapport à la puissance émise par ce laser, c'est-à-dire dépendant du taux d'injection contrôlé par le module à gain variable 26. Notamment lorsque ce module à gain variable 26 est réalisé sous forme d'un amplificateur optique semiconducteur, et lorsqu'il est soumis à un courant de polarisation faible ou à une faible tension de polarisation inverse, il atténue la lumière le traversant, tandis que lorsqu'il est soumis à un courant de polarisation plus important, la lumière qui le traverse est amplifiée. Le module à gain variable 26 est en variante réalisé différemment, par exemple sous forme d'un modulateur à électro-absorption, contrôlé en tension.

Il est à noter que dans cette demande les éléments de contrôle de chacune des briques optiques 18, 26 et 28, notamment générant les courants ou tensions de polarisation, ne sont pas détaillés car bien connus de l'Homme du métier.

Le module à gain variable 26 et le laser semiconducteur 28 permettent donc de filtrer la lumière modulée issue du module d'entrée 18 grâce au verrouillage du laser sur la bande de fréquence de verrouillage, cette bande de fréquence ne comportant pas les fréquences latérales indésirables dans la lumière modulée issue du module d'entrée 18. Pour cela il faut bien sûr que les fréquences latérales soient séparées d'un écart de fréquence supérieur à cette bande de fréquence de verrouillage. De préférence la modulation opérée par le module d'entrée génère un écart de fréquence plusieurs fois supérieur à cette bande de fréquence de verrouillage. En effet le rejet des fréquences indésirables est d'autant meilleur que l'écart entre ces fréquences indésirables et la fréquence naturelle d'émission du laser semiconducteur 28 est important.

Il est à noter qu'en variante de réalisation de l'invention, le module à décalage de fréquence utilise un modulateur à bande latérale unique électro-optique en lieu et place du module d'entrée 18 et du module de sélection de fréquence 20. Cependant cette variante est complexe à contrôler et à réaliser, ce qui induit un encombrement important sur le circuit photonique intégré. De plus le rejet des fréquences indésirables dans cette variante est moins optimal que dans la variante principale de réalisation de l'invention, qui est donc préférée à cette variante utilisant un modulateur à bande latérale unique.

De préférence, un isolateur optique est placé entre la source de lumière laser 16 et le circuit photonique intégré 30. Cet isolateur optique n'autorise la lumière à se propager que depuis la source de lumière laser 16 vers le circuit photonique intégré 30, ce qui évite le retour de lumière entre le laser semiconducteur 28 et la source de lumière laser 16, ce qui générerait des interactions gênant le bon fonctionnement du système. Il est à noter que la présence de cet isolateur optique ne nuit pas à l'intégration de tout le module de décalage de fréquence dans le circuit photonique intégré 30 tel qu'il est réalisé dans l'invention. En effet, d'autres réalisations de modules de décalage en fréquence, par exemple en utilisant directement un laser comme générateur d'un peigne de fréquence, auraient empêché une telle intégration car l'isolateur optique doit être placé entre le laser source et le laser de démultiplexage.

Il est à noter qu'en variante de réalisation de l'invention il est possible d'utiliser un isolateur intégré dans le circuit photonique intégré 30, mais ce type d'isolateur étant toujours sujet de recherches cette variante n'est pas préférée. En effet un tel isolateur n'est pas disponible sur les plateformes de fonderie standards, nécessiterait des étapes de fabrication supplémentaires et occuperait un espace conséquent sur le circuit photonique intégré, alors même que ses performances sont bien en dessous de celles des isolateurs optiques classiques en termes de pertes et d'isolation.

Dans une autre variante de réalisation de l'invention, le module de sélection de fréquence 20 est un filtre photonique interférométrique à bande étroite.

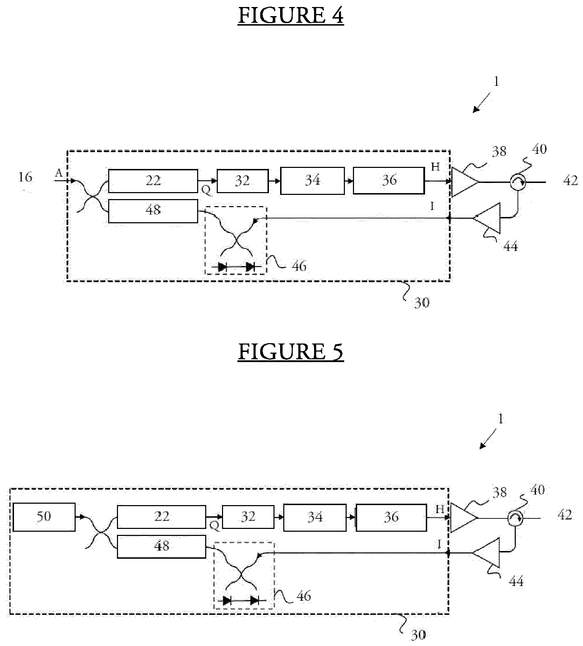

Dans un premier mode de réalisation de l'invention, le système 1 de capteur à fibre optique selon l'invention comporte en outre, comme représenté sur la figure 4, deux chemins optiques séparés, un chemin aller et un chemin retour. Sur le chemin aller, la lumière 24 décalée en fréquence issue d'un port de sortie Q du module à décalage de fréquence 22, est envoyée dans une fibre à tester 42, préférentiellement après passage dans un ou plusieurs modulateurs 32, 34, 36 permettant de modeler la lumière décalée en fréquence 24 sous forme d'impulsions de lumière afin de constituer un signal de test lumineux dont le retour est plus facile à analyser.

La formation des impulsions de durées typiquement comprises entre 10ns (nanosecondes) et 100ns est obtenue par une modulation effectuée par le modulateur 36, qui est par exemple un amplificateur optique semi-conducteur (connu sous l'acronyme SOA pour l'anglais « Semiconductor Optical Amplifier »), apte à atténuer ou amplifier le signal le parcourant en fonction de son courant de polarisation, ou un modulateur d'intensité électro-optique (EOM d'après l'anglais « Electro-Optic Modulator ») intégrable dans le circuit photonique intégré 30. Ce modulateur 36 forme les impulsions et les code en outre éventuellement en intensité. Les impulsions formées sont éventuellement en outre modulées en phase par un modulateur de phase électro-optique 32, et/ou par un modulateur de polarisation 34.

En variante, la lumière 24 décalée en fréquence issue d'un port de sortie Q du module à décalage de fréquence 22, est envoyée dans une fibre à tester 42 sans passage par les modulateurs 32, 34 et 36 (ces modulateurs sont par exemple désactivables en fonction de l'utilisation du circuit photonique intégré 30). Dans cette variante, le module à décalage de fréquence 22 fait varier la fréquence de la lumière injectée dans la fibre à tester 42 en fonction du temps, par exemple selon un signal fréquentiel en dent de scie ou triangulaire. Dans ce cas l'analyse de la lumière rétrodiffusée en sortie de la fibre à tester 42 utilise une transformée de Fourrier.

La lumière 24 décalée en fréquence et mise en forme éventuellement à travers les différents modulateurs 32, 34, 36, correspond à un signal lumineux de test qui sort du circuit photonique intégrée 30 par son port de sortie H, et est envoyé dans un amplificateur optique 38 qui augmente le niveau de puissance de ce signal lumineux de test jusqu'au niveau de puissance adéquat avant sa transmission dans la fibre 42 à tester via un dispositif de circulation optique, ici un circulateur 40. En effet ce signal lumineux de test doit être assez puissant pour qu'un signal retour correspondant en provenance de la fibre à tester 42 puisse être reçu par le circulateur 40 et analysé par le système 1 selon l'invention. Le circulateur 40 sépare la lumière transmise dans la fibre à tester 42 de la lumière rétrodiffusée correspondante, qui correspond à ce signal retour. Cette lumière rétrodiffusée suit le chemin retour du système 1 de capteur à fibre optique, c'est-à-dire est amplifiée par un amplificateur optique 44 avant d'entrer dans le circuit photonique intégré 30 par un port de retour I. Cette lumière rétrodiffusée amplifiée est ensuite envoyée dans un récepteur 46.

Il est à noter que le circulateur 40 permet à la lumière de passer du port H vers la fibre à tester 42, et de la fibre à tester 42 vers le port I, mais interdit tout retour de lumière de la fibre à tester 42 vers le port H, ou du port I vers le port H, ou encore du port I vers la fibre à tester 42. Il en est de même pour tout autre type de dispositif de circulation optique dans le sens de la présente demande. En variante ce dispositif de circulation optique est un commutateur optique (dans le cas de signaux optiques de durée finie), ou un coupleur, éventuellement un coupleur dichroïque.

Les amplificateurs optiques 44 et 38 sont typiquement des amplificateurs à fibre dopée à l'erbium (« erbium-doped fiber amplifier » en anglais) amenant la lumière en sortie à une puissance de l'ordre de 100mW (milliwatt). La lumière arrivant du circuit photonique intégré 30 sur l'amplificateur optique 38 est à moins de 10mW notamment du fait des pertes lumineuses dans le circuit photonique intégré 30 sur le chemin aller. De même, la lumière rétrodiffusée par la fibre à tester 42 est de puissance comprise typiquement entre 0.1 et 100 nW (nanoWatt). En variante les amplificateurs ne sont pas utilisés, notamment dans le cas d'une application de l'invention sur une fibre à tester EBF.

Dans encore une autre variante, on utilise à la place des amplificateurs 38 et 44 externes, et du circulateur 40, des amplificateurs internes associés à un ou plusieurs coupleurs directionnels internes, c'est-à-dire que ces amplificateurs et coupleurs sont dans cette autre variante, intégrés dans le circuit photonique intégré 30. Cet arrangement est par exemple utilisé lorsque le module à décalage de fréquence 22et les modulateurs 32, 34, 36 génèrent des trains d'impulsions très longs ou encore lorsque le module à décalage de fréquence 22 utilise un balayage fréquentiel (notamment selon la technique dite OFDR pour l'anglais « Optical Frequency-Domain Reflectometry »).

Le récepteur 46 reçoit la lumière rétrodiffusée amplifiée ainsi qu'une partie de la lumière non rétrodiffusée émise par la source de lumière laser 16, grâce à un coupleur directionnel positionné entre d'une part le port A d'entrée et d'autre par le module à décalage de fréquence 22 et le récepteur 46. De préférence cette lumière non rétrodiffusée est décalée en fréquence par un modulateur à décalage de fréquence 48 avant sa transmission au récepteur 46, afin de fournir au récepteur 46 une lumière non rétrodiffusée dans une plage de fréquence facilitant le traitement du récepteur 46.

Le module à décalage de fréquence 48 réalise la fonction d'oscillateur local pour le récepteur 46, qui est par exemple un récepteur cohérent, de préférence un récepteur équilibré (« balanced receiver » en anglais), c'est-à-dire qu'il élimine les fluctuations d'intensité de lumière dans la lumière non rétrodiffusée qu'il reçoit, ces fluctuations étant connues sous le nom de bruit d'intensité relative (« Relative Intensity Noise » en anglais).

Le récepteur 46 module la lumière rétrodiffusée reçue avec la lumière non rétrodiffusée reçue éventuellement décalée en fréquence, et construit un signal électrique représentatif de différences de phase et/ou d'amplitude entre la lumière envoyée en entrée de la fibre à tester 42 et la lumière rétrodiffusée correspondante issue de la fibre à tester 42. Pour cela le récepteur 46 inclut des modules électro-optiques permettant notamment d'effectuer une variation de gain de la lumière, de moduler la lumière en phase, en polarisation ou en intensité, afin notamment d'effectuer un traitement inverse de celui des modulateurs 32, 34, 36. Le signal électrique construit est ensuite converti en signal numérique et traité dans un module logiciel effectuant un diagnostic de la fibre à tester. Ce diagnostic est par exemple une ou plusieurs mesures de température, de déformation ou plus généralement de pression, localisées sur la fibre à tester 42. En variante, certains traitements de démodulation (phase, amplitude, polarisation) ne sont pas effectués par le récepteur 46 mais sont effectués numériquement en dehors du circuit photonique intégré 30, dans le module logiciel. Le module logiciel fait préférentiellement partie du système 1 selon l'invention.

Le système 1 capteur à fibre optique représenté figure 4 intègre donc dans un même circuit photonique intégré 30, dans ce premier mode de réalisation de l'invention, les modules à décalage de fréquence 22 et 48, les modulateurs 32, 34, 36 et le récepteur 46. Autrement dit ces modules sont conçus en un bloc sur un même substrat. Seuls le circulateur 40 et les amplificateurs optiques 38 et 44 ne sont pas intégrés au circuit photonique intégré 30 bien que faisant partie du système 1 capteur à fibre optique selon l'invention. Bien sûr, l'électronique de ces modules ainsi que le module logiciel du récepteur 46 sont implémentés en dehors du substrat, ainsi que l'électronique d'acquisition des données (convertisseur analogique-numérique). Le fait que le chemin optique entre le port d'entrée A et le récepteur 46 soit complètement intégré dans le circuit photonique intégré 30 élimine les effets microphoniques dus par exemple aux vibrations subies par le système 1 lors de sa manipulation. De plus, l'intégration du récepteur 46 dans le circuit photonique intégré 30 optimise l'encombrement du système 1 et permet de faire plus facilement correspondre les longueurs des chemins optiques arrivant au récepteur 46.

En variante de réalisation de l'invention, le récepteur 46 est implémenté de manière externe au circuit photonique intégré 30.

Dans un exemple d'utilisation du système 1 capteur à fibre optique selon l'invention tel que réalisé en figure 4, le système 1 est utilisé comme capteur acoustique distribué (« Distributed Acoustic Sensor » en anglais) pour mesurer une ou plusieurs déformations localisées dans la fibre 42 à tester. Dans cet exemple d'utilisation, la source de lumière laser 16 émet une lumière à 1550nm et est décalée en fréquence par le module à décalage de fréquence 22 de quelques GHz puis travaillée en impulsions par les modules 32, 34, 36. En sortie du circuit intégré photonique 30, des premières impulsions sont émises dans la fibre à tester 42 à 5GHz, puis des deuxièmes impulsions sont émises dans la fibre à tester 42 à 5,1GHz, etc. Le module à décalage de fréquence 48 génère en même temps une lumière non rétrodiffusée à 4,9 GHz. Le récepteur 46 reçoit donc une lumière rétrodiffusée et une lumière non rétrodiffusée décalées en fréquence d'un décalage de l'ordre de 100 MHz, puis de 200MHz, etc, ce qui facilite le traitement de ces signaux lumineux. En effet, les bandes de fréquence de travail des récepteurs cohérents sont en général limitées du fait notamment des limitations de traitement des convertisseurs analogiques-numériques qui sont en sortie de ces récepteurs. Bien sûr en variante la source laser émet à une longueur d'onde différente de 1550nm, les décalages de fréquence étant adaptés en conséquence par l'Homme du métier.

Dans un autre exemple d'utilisation du système 1 capteur à fibre optique selon l'invention tel que réalisé en figure 4, le système 1 est utilisé comme réflectomètre optique à domaine temporel à effet Brillouin (« Brillouin Optical Time Domain Reflectometer » en anglais) pour mesurer des déformations ou des points chauds localisés dans la fibre 42 à tester. Dans cet exemple d'utilisation, la source de lumière laser 16 émet une lumière à 1550m et est décalée en fréquence par le module à décalage de fréquence 22 de quelques GHz puis travaillée en impulsions par les modules 32, 34, 36. En sortie du circuit intégré photonique 30, des premières impulsions sont émises dans la fibre à tester 42 à 5GHz, puis éventuellement des deuxièmes impulsions sont émises dans la fibre à tester 42 à 5,1GHz, etc. Le module à décalage de fréquence 48 génère en même temps une lumière non rétrodiffusée à -5,8 GHz. En effet le récepteur 46 reçoit une lumière rétrodiffusée décalée d'environ -11GHz du fait de l'effet Brillouin. Le décalage en fréquence entre la lumière non rétrodiffusée et la lumière rétrodiffusée qu'il reçoit est donc de l'ordre de 200 MHz, puis éventuellement de 100MHz, etc, ce qui facilite le traitement de ces signaux lumineux.

La figure 5 représente une variante de réalisation du premier mode de réalisation de l'invention, dans laquelle le système 1 de capteur à fibre optique selon l'invention incorpore une source de lumière laser à bande étroite 50, intégrée dans le circuit photonique intégré 30, en entrée du module à décalage de fréquence 22 et du module à décalage de fréquence 48. La source de lumière laser 50 est par exemple monolithique de largeur spectrale inférieure à 2 MHz pour une application utilisant l'effet Brillouin, ou inférieure à 5kHz pour une application DAS. Cette variante de réalisation est adaptée notamment pour les capteurs distribués à effet Brillouin et les réflectomètres optiques à domaine fréquentiel. Cependant, cette variante empêche la possibilité d'insérer un isolateur optique externe entre la source de lumière laser 50 et le laser semi-conducteur 28, et n'est donc pas la variante préférée de réalisation de l'invention.

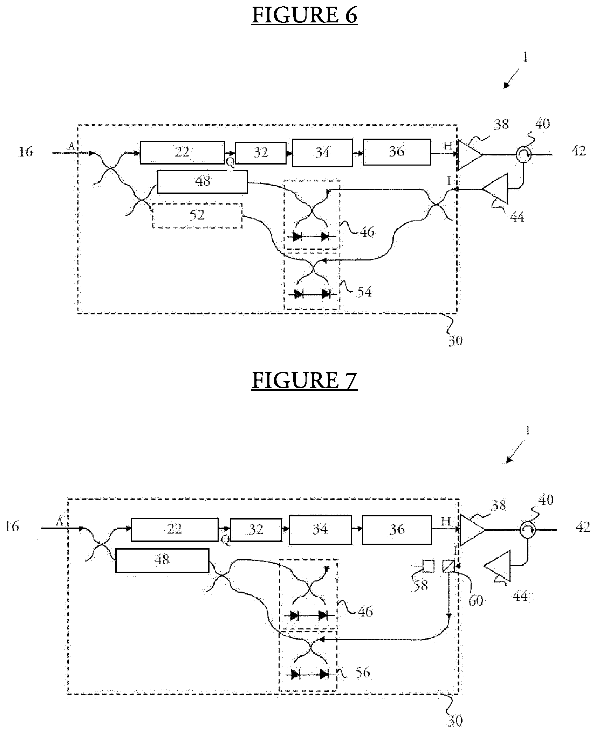

Selon un deuxième mode de réalisation représenté sur la figure 6, le système 1 capteur à fibre optique selon l'invention comporte en outre, comparé au premier mode de réalisation de l'invention, un deuxième récepteur 54. Les éléments du système 1 capteur à fibre optique selon ce deuxième mode de réalisation qui sont communs au système 1 capteur à fibre optique selon le premier mode de réalisation portent les mêmes références et réalisent les mêmes fonctions. Ils ne seront donc pas détaillés à nouveau dans la description de ce deuxième mode de réalisation.

Dans ce deuxième mode de réalisation de l'invention, la lumière émise par la source de lumière laser 16 est envoyée en partie dans le module à décalage de fréquence 22, en partie dans le module à décalage de fréquence 48, et en partie, grâce à un autre coupleur directionnel positionné entre d'une part le port d'entrée A et d'autre part les récepteurs 54, 46, vers le deuxième récepteur 54, qui reçoit également une partie de la lumière rétrodiffusée amplifiée en provenance du port I du circuit photonique intégré 30, grâce à un coupleur directionnel positionné entre le port I d'une part et les récepteurs 46 et 54 d'autre part. Le récepteur 54 est de préférence un récepteur cohérent et équilibré fonctionnant de manière analogue au récepteur 46, notamment il construit un signal électrique représentatif des différences de phase et/ou d'amplitude entre les lumières non rétrodiffusée et rétrodiffusée qu'il reçoit. Ce signal électrique est ensuite converti en signal numérique et traité par un module logiciel du système 1 selon l'invention.

La présence de ce deuxième détecteur 54 permet d'analyser deux types de lumière rétrodiffusée simultanément. En fonction du type de mesure effectué par chacun des détecteurs 46 et 54, le circuit photonique intégré 30 intègre éventuellement un troisième module 52 à décalage de fréquence entre la source de lumière laser 16 et le deuxième récepteur 54.

Par exemple le récepteur 46 analyse la lumière rétrodiffusée par effet Rayleigh (ou par pseudo-effet Rayleigh dans le cas d'une fibre à tester de type EBF) et le récepteur 54 analyse la lumière rétrodiffusée par effet Brillouin. Dans ce cas les décalages de fréquence opérés par les modules à décalage de fréquence 22 et 48 sont similaires (par exemple proches de 5GHz). Le module à décalage de fréquence 52 opérera quant à lui un décalage de fréquence à -5,8 GHz, ce qui permet de travailler au niveau du récepteur 54 sur la partie inférieure du spectre de Brillouin.

Une autre solution pour cette double détection utilisant les effets Rayleigh et Brillouin est de faire travailler les modules à décalage de fréquence 22 et 48 autour de 11GHz. Dans cette autre solution, le module à décalage de fréquence 52 n'est pas nécessaire, le récepteur 54 pouvant travailler sur la partie inférieure du spectre de Brillouin. La présence d'un troisième module à décalage de fréquence 52 permet néanmoins plus de flexibilité dans le choix du décalage de fréquence pour permettre aux récepteurs 46 et 54 d'effectuer leurs mesures.

Selon un troisième mode de réalisation représenté sur la figure 7, le système 1 capteur à fibre optique selon l'invention comporte en outre, comparé au premier mode de réalisation de l'invention, un autre récepteur 56, un séparateur optique 60 de polarisation et un rotateur de polarisation 58. Les éléments du système 1 capteur à fibre optique selon ce troisième mode de réalisation qui sont communs au système 1 capteur à fibre optique selon le premier mode de réalisation portent les mêmes références et réalisent les mêmes fonctions. Ils ne seront donc pas détaillés à nouveau dans la description de ce troisième mode de réalisation.

Dans ce troisième mode de réalisation de l'invention, l'autre récepteur 56 reçoit une partie de la lumière non rétrodiffusée décalée en fréquence par le module 48 à décalage de fréquence, et reçoit une partie de la lumière rétrodiffusée amplifiée par l'amplificateur optique 44, en provenance de la fibre à tester 42, au travers du séparateur optique 60 de polarisation. L'autre partie de la lumière non rétrodiffusée décalée en fréquence par le module 48 à décalage de fréquence est envoyée au récepteur 46, qui reçoit en outre l'autre partie de la lumière rétrodiffusée amplifiée par l'amplificateur optique 44, mais via un rotateur 58 de polarisation réglé à 90°. Un coupleur directionnel est placé pour cela entre le module à décalage de fréquence 48 et le récepteurs 46, 56. Le séparateur optique 60 de polarisation permet de séparer le faisceau lumineux en sortie de l'amplificateur optique 44 en deux faisceaux de lumière polarisés orthogonalement l'un à l'autre. L'un des faisceaux est envoyé en direction du récepteur 56 et l'autre en direction du rotateur de polarisation 58. Le rotateur de polarisation 58 modifie la polarisation de la lumière qu'il reçoit par une rotation de 90° avant de transmettre la lumière ainsi modifiée au récepteur 46. Ainsi, chacun des récepteurs 46 et 54 reçoit deux composantes différentes de la lumière rétrodiffusée, correspondant à des états de polarisation différents en sortie de l'amplificateur optique 44.Grâce au rotateur 58, le récepteur cohérent 46 reçoit une lumière rétrodiffusée de polarisation parallèle à celle de la lumière qu'il reçoit du module à décalage de fréquence 48, ce qui lui est nécessaire pour effectuer l'analyse des différences de phase et d'amplitude entre la lumière injectée dans la fibre à tester 42 et la lumière rétrodiffusée par cette fibre.

Comme la lumière injectée dans la fibre à tester 42 est généralement polarisée, et que la lumière rétrodiffusée est très peu dépolarisée (seulement 5% de la lumière injectée est dépolarisée par effet Rayleigh), les récepteurs 46 et 54 du premier mode de réalisation qui détectent la lumière dans le même état de polarisation que la lumière injectée, ne détectent pas la lumière rétrodiffusée dépolarisée (i.e dont la polarisation est modifiée). Le troisième mode de réalisation de l'invention permet donc au récepteur 56 d'analyser la lumière rétrodiffusée non dépolarisée, et au récepteur 46 d'analyser la lumière rétrodiffusée dépolarisée.

Cela permet, par rapport à des récepteurs qui ne détecteraient qu'un état de polarisation de la lumière rétrodiffusée, de s'affranchir du phénomène d'évanouissement du signal (appelé « polarization fading » en anglais) traité par de tels récepteurs, phénomène lié à des endroits de la fibre où la lumière rétrodiffusée a subi une modification de polarisation et donc est reçue avec un rapport signal à bruit trop faible. Ainsi le troisième mode de réalisation de l'invention permet de garder un rapport signal à bruit assez bon pour permettre au système 1 selon l'invention d'analyser toute la longueur de la fibre à tester 42. De plus ce système 1 de capteur à fibre optique selon l'invention étant à double polarisation, permet dans certains cas d'obtenir des informations de diagnostic supplémentaires sur la fibre à tester, telles que sa courbure, ou des déformations latérales sur la fibre à tester, qui modulent sa biréfringence, ou encore les champs magnétiques parallèles à l'axe de la fibre à tester dus à l'effet de Faraday.

L'invention, telle qu'elle vient d'être décrite, atteint bien le but qu'elle s'était fixée, et permet de proposer un système capteur à fibre optique compact et flexible dans le paramétrage du ou des décalages en fréquence de ses modules, ce qui autorise un grand nombre d'applications. Des variantes non décrites ici ou des combinaisons de variantes décrites ici pourraient être mises en oeuvre sans sortir du contexte de l'invention, dès lors que, conformément à l'invention, elles comprennent un module à décalage de fréquence intégré dans un circuit photonique intégré conformément à l'invention.

Bien sûr, l'invention n'est pas limitée aux exemples qui viennent d'être décrits et de nombreux aménagements peuvent être apportés à ces exemples sans sortir du cadre de l'invention.

## Revendications

1. Système (1) de capteur à fibre optique distribué comportant :
- un port d'entrée (A) apte à recevoir un faisceau de lumière laser généré par une source de lumière laser (16),
- un module à décalage de fréquence (22) apte à recevoir au moins une partie de la lumière issue dudit faisceau et à décaler en fréquence ladite lumière reçue,
- un port de sortie (H) apte à recevoir ladite lumière décalée en fréquence et à l'envoyer dans un dispositif de circulation optique (40),
- ledit dispositif de circulation optique (40), ledit dispositif de circulation optique étant apte à :
- transmettre ladite lumière décalée en fréquence dans une fibre optique (42),
- recevoir une lumière rétrodiffusée correspondant à ladite lumière décalée en fréquence, en provenance de ladite fibre optique (42),
- séparer ladite lumière rétrodiffusée de ladite lumière transmise, et à
- envoyer ladite lumière rétrodiffusée vers un récepteur (46),
- ledit récepteur (46), ledit récepteur étant apte à construire à partir de ladite lumière rétrodiffusée et d'une lumière non rétrodiffusée issue de ladite source de lumière laser (16), un signal électrique représentatif de différences de phase et/ou d'amplitude entre ladite lumière rétrodiffusée et ladite lumière transmise,
ledit système (1) de capteur à fibre optique étant **caractérisé en ce qu'**il comporte un circuit intégré photonique (30) dans lequel est implémenté ledit module à décalage de fréquence (22).

2. Système (1) de capteur à fibre optique distribué selon la revendication 1, dans lequel ledit circuit intégré photonique (30) comporte également ledit récepteur (46).

3. Système (1) de capteur à fibre optique distribué selon la revendication 1 ou 2, dans lequel ledit module à décalage de fréquence (22) comporte en entrée, un modulateur d'entrée (18) apte à moduler ladite au moins une partie de la lumière issue dudit faisceau de lumière laser par un signal périodique.

4. Système (1) de capteur à fibre optique distribué selon la revendication précédente, dans lequel ledit modulateur d'entrée (18) est un modulateur de phase électro-optique, ou un modulateur d'intensité électro-optique, ou un modulateur à électro-absorption, ou un amplificateur optique à semi-conducteur.

5. Système (1) de capteur à fibre optique distribué selon la revendication 3 ou 4, dans lequel ledit module à décalage de fréquence (22) comporte en outre :
- Un module à gain variable (26) apte à faire varier l'amplitude de la lumière modulée en sortie dudit modulateur d'entrée (18), et
- Un laser semiconducteur (28) apte à recevoir la lumière issue dudit module à gain variable (26) et à émettre une lumière décalée en fréquence par rapport à la lumière issue de ladite source de lumière (16), d'un décalage fréquentiel fonction de la fréquence dudit signal périodique.

6. Système (1) de capteur à fibre optique distribué selon la revendication 3 ou 4, dans lequel ledit module à décalage de fréquence (22) comporte en outre, en sortie dudit modulateur d'entrée (18), un filtre photonique interférométrique à bande étroite.

7. Système (1) de capteur à fibre optique distribué selon l'une quelconque des revendications précédentes, comportant un premier amplificateur optique (38) entre ledit port de sortie et ledit dispositif de circulation optique (40), et un deuxième amplificateur optique (44) entre ledit dispositif de circulation optique (40) et ledit récepteur (46).

8. Système (1) de capteur à fibre optique distribué selon l'une quelconque des revendications précédentes, dans lequel ledit circuit intégré photonique (30) comporte en outre, entre ledit module à décalage de fréquence (22) et ledit port de sortie (H), un ou plusieurs modulateurs (32, 34, 36) choisis parmi :
- un modulateur de phase électro-optique (32),
- un modulateur d'intensité électro-optique (36),
- un modulateur à électro-absorption (36),
- un amplificateur optique à semi-conducteur (36),
- un modulateur de polarisation (34).

9. Système (1) de capteur à fibre optique distribué selon l'une quelconque des revendications précédentes, dans lequel ledit circuit intégré photonique (30) comporte en outre un autre module à décalage de fréquence (48) apte à recevoir une partie de la lumière issue de ladite source de lumière laser (16), à décaler ladite partie de lumière en fréquence et à transférer ladite partie de lumière décalée en fréquence audit récepteur (46).

10. Système (1) de capteur à fibre optique distribué selon la revendication précédente, dans lequel ledit circuit intégré photonique (30) comporte en outre un autre récepteur (54) apte à recevoir une partie de ladite lumière rétrodiffusée et une partie de la lumière issue de ladite source de lumière laser (16) sans décalage fréquentiel ou avec un décalage fréquentiel distinct du décalage fréquentiel généré par ledit autre module à décalage de fréquence (48), ledit décalage fréquentiel distinct étant alors généré par encore un autre module à décalage de fréquence (52) dudit circuit intégré photonique (30).

11. Système (1) de capteur à fibre optique distribué selon la revendication 9, dans lequel ledit circuit intégré photonique (30) comporte en outre un séparateur optique de polarisation (60), un rotateur de polarisation (58) et un autre récepteur (56) apte à recevoir une partie de ladite lumière rétrodiffusée en sortie dudit rotateur de polarisation (58), et à recevoir une partie de la lumière issue dudit autre module à décalage de fréquence (48), ledit séparateur optique de polarisation (60) étant apte à recevoir ladite lumière rétrodiffusée en provenance dudit dispositif de circulation optique (40), à former deux faisceaux de lumière et à envoyer l'un desdits faisceaux vers ledit récepteur (46) et l'autre desdits faisceaux vers ledit rotateur de polarisation (58).
